# EUROPEAN PATENT APPLICATION

(11) **EP 4 821 960 A1**
(43) Date of publication of application: **14.10.2026**
(21) Application number: 25774821.0
(22) Date of filing: 08.01.2025
(51) Int. Cl.: C08F 112/12, C08F 4/00, C08F 4/52, C09D 7/20, C09D 163/00, C09D 7/63

(54) **POLYMER COMPOSITION AND COATING COMPOSITION COMPRISING SAME**

(30) Priority: 19.03.2024 KR 20240037918; 20.11.2024 KR 20240166601
(71) Applicant: Kolon Industries, Inc., Seoul 07793 (KR)
(72) Inventor: SUNG, Jong Un, Seoul 07793 (KR); KIM, Yu Sung, Seoul 07793 (KR); KIM, Sang Hun, Seoul 07793 (KR); PARK, Kyong Kook, Seoul 07793 (KR)
(74) Representative: Vossius & Partner Patentanwälte Rechtsanwälte mbB
(86) International application number: PCT/KR2025/000404
(87) International publication number: WO 2025/198157

(57) **Abstract**

The present disclosure provides a polymer composition including a polymer containing units derived from α-methylstyrene-based monomers, wherein the content of an indane-based compound derived from two α-methylstyrene-based monomers is 5 wt% or less based on the total weight of the polymer composition, and the content of an indane-based compound derived from three α-methylstyrene-based monomers is 0.1 wt% or less based on the total weight of the polymer composition. A coating film formed from a paint composition including the polymer composition may exhibit excellent bending resistance, impact resistance, and chemical resistance.

## Description

### Technical Field

The present disclosure relates to a polymer composition and a paint composition including the same.

### Background Art

On the surfaces of ships or heavy-duty anticorrosive structures, a coating film is formed to protect the structure from harsh environments. Unlike land-based structures, this coating film must not only withstand severe corrosive environments but also ensure safety and allow for easy maintenance.

The performance of the coating film is greatly influenced by the properties of the diluent incorporated in the paint. Diluents in the art for heavy-duty epoxy paint have included various nonreactive components such as alkylphenol compounds (for example, nonylphenol, dodecylphenol, and octylphenol), C₅-C₉ hydrocarbon resins, and oligomers of phenol and α-methylstyrene.

In particular, these alkyl phenol compounds have been widely used as additives or surfactants for heavy-duty epoxy coatings requiring plasticity. However, these alkylphenol compounds have been identified as nephrotoxic and endocrine disruptors, leading to a worldwide ban or progressively stricter limitations on their use.

Moreover, during a recent EU REACH substance evaluation, α-methylstyrenated phenol among phenolic compounds was classified as a Substance of Very High Concern (SVHC). In particular, the triaryl indane-structure material within α-methylstyrenated phenol has been identified as very persistent (vP) and very bioaccumulative (vB). This has led to an increasing need to develop new diluents that control the content of vPvB substances and do not fall under SVHC regulations.

### Disclosure of Invention

### Technical Problem

The present disclosure is to provide a polymer composition suitable for a paint composition by controlling the content of vPvB substances. In addition, the present disclosure is to provide a polymer composition capable of improving bend resistance, impact resistance, and chemical resistance of coating films prepared from the paint composition.

### Solution to Problem

An aspect of the present disclosure relates to a polymer composition including a polymer containing units derived from α-methyl styrene-based monomers, wherein the content of an indane-based compound derived from two α-methyl styrene-based monomers is about 5 wt% or less based on the total weight of the polymer composition, and the content of an indane-based compound derived from three α-methyl styrene-based monomers is about 0.1 wt% or less based on the total weight of the polymer composition.

Another aspect of the present disclosure relates to a paint composition comprising the polymer composition.

### Advantageous Effects of Invention

The polymer composition according to the present disclosure includes a polymer containing units derived from α-methylstyrene-based monomers, wherein the content of an indane-based compound derived from two α-methylstyrene-based monomers in the polymer composition is 5 wt% or less based on the total weight of the polymer composition, and the content of an indane-based compound derived from three α-methylstyrene-based monomers is 0.1 wt% or less based on the total weight of the polymer composition; as a result, a coating film manufactured from a paint composition including this polymer composition may exhibit excellent bend resistance, impact resistance, and chemical resistance.

Furthermore, since the content of an indane-based compound derived from three α-methylstyrene-based monomers in the polymer composition is controlled to 0.1 wt% or less based on the total weight of the polymer composition, the polymer composition may be used as a diluent for environmentally-friendly coatings that is not subject to Substance of Very High Concern (SVHC) regulations.

### Mode for the Invention

Hereinafter, various aspects and embodiments of the present disclosure will be described in greater detail.

As used in the present specification and appended claims, terms and phrases should not be interpreted according to their conventional or customary meanings. Rather, the meaning of such terms and phrases should be construed in accordance with the technical concepts of the present disclosure, recognizing that the inventors may define specific terms to properly describe their invention.

The terminology used herein is for the purpose of describing particular embodiments only and is not intended to be limiting the scope of the present disclosure. As used herein, the singular forms are intended to include the plural forms as well, unless the context clearly indicates otherwise. As used herein, the terms "comprises" and/or "comprising", or "includes" and/or "including" specify the presence of stated features, integers, steps, operations, elements, components, or combinations thereof, but do not preclude the presence or addition of one or more other features, integers, steps, operations, elements, components, or combinations thereof.

In the present disclosure, alkyl groups having 1 to 15 carbon atoms may include methyl group, ethyl group, propyl group, butyl group, pentyl group, hexyl group, heptyl group, octyl group, nonyl group, decyl group, and the like.

In the present disclosure, alkenyl groups having 2 to 15 carbon atoms may contain one or more unsaturated double bonds. Alkenyl groups having 2 to 15 carbon atoms may include ethenyl group, propenyl group, butenyl group, pentenyl group, pentadienyl group, hexenyl group, hexadienyl group, hexatrienyl group, and the like.

Specifically, the polymer composition according to an aspect of the present disclosure may be a polymer composition including a polymer including units derived from α-methylstyrene-based monomers, wherein the content of an indane-based compound derived from two α-methylstyrene-based monomers may be 5 wt% or less based on the total weight of the polymer composition, and the content of an indane-based compound derived from three α-methylstyrene-based monomers may be 0.1 wt% or less based on the total weight of the polymer composition.

For example, the polymer composition may include 0.1 wt% or less of an indane-based compound derived from three α-methylstyrene-based monomers and may be utilized as a diluent for environmentally-friendly coatings free of SVHC (Substance of Very High Concern).

For example, the content of an indane-based compound derived from two α-methylstyrene-based monomers may be 5 wt% or less, and the content of an indane-based compound derived from three α-methylstyrene-based monomers may be 0.1 wt% or less, based on the total weight of the polymer composition, thus enabling coating films formed from paint compositions containing the polymer composition to exhibit excellent bending resistance, impact resistance, and chemical resistance.

For instance, the content of an indane-based compound derived from three α-methylstyrene-based monomers in the polymer composition may be 0.05 wt% or less, 0.04 wt% or less, 0.03 wt% or less, 0.02 wt% or less, or 0.01 wt% or less, based on the total weight of the polymer composition. For example, the lower the content of the indane-based compound derived from three α-methylstyrene-based monomers in the polymer composition within the specified range, the more readily the polymer composition may be applied as a diluent for environmentally-friendly paint that is not subject to Substance of Very High Concern (SVHC) regulations.

The polymer composition may be prepared using two or more types of catalysts during the preparation process to control the content of both an indane-based compound derived from two α-methylstyrene-based monomers and an indane-based compound derived from three α-methylstyrene-based monomers in the polymer composition.

The two or more catalysts may include para-toluene sulfonic acid (PTSA), and methylaluminoxane (MAO) in toluene. When the two or more catalysts include PTSA, and MAO in toluene, the content of the indane-based compounds derived from two α-methylstyrene-based monomers and those derived from three α-methylstyrene-based monomers in the polymer composition may be readily controlled within the aforementioned range.

The preparation of the polymer composition may be carried out at a temperature in the range of 20 °C to 150 °C.

According to an embodiment, the α-methylstyrene-based monomer may be represented by Formula 1.

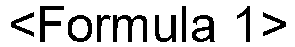

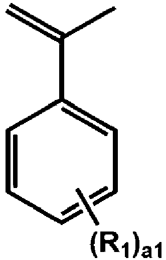

In Formula 1, R₁ is hydrogen, an alkyl group having 1 to 15 carbon atoms, or an alkenyl group having 2 to 15 carbon atoms, and a1 is an integer of 1 to 5.

For example, in Formula 1, R₁ may be hydrogen, an alkyl group having 1 to 3 carbon atoms, or an alkenyl group having 2 to 3 carbon atoms, and a1 may be an integer of 1 to 5. In Formula 1, R₁ may be hydrogen, a methyl group, or an isopropenyl group.

For example, the α-methylstyrene-based monomer may include α-methylstyrene.

According to an embodiment, the polymer composition may include only a polymer having units derived from the α-methylstyrene-based monomer. For example, the polymer composition may not include units derived from phenol-based monomers.

According to an embodiment, the indane-based compound derived from three α-methylstyrene-based monomers may be represented by Formula 2 below.

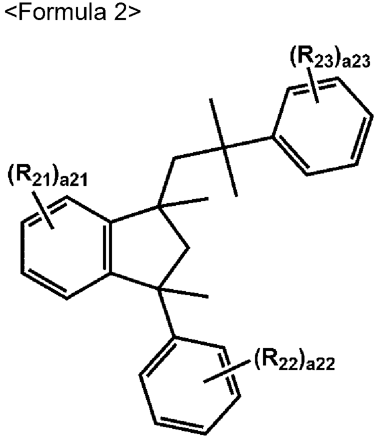

In Formula 2, R₂₁ to R₂₃ are each independently hydrogen, an alkyl group having 1 to 15 carbon atoms, or an alkenyl group having 2 to 15 carbon atoms; a21 is an integer of 1 to 4; and a22 to a23 are each independently an integer of 1 to 5.

For example, in Formula 2, R₂₁ to R₂₃ are each independently hydrogen, an alkyl group having 1 to 3 carbon atoms, or an alkenyl group having 2 to 3 carbon atoms; a21 is an integer of 1 to 4; and a22 to a23 are each independently an integer of 1 to 5.

In Formula 2, R₂₁ to R₂₃ may each be hydrogen, a methyl group, or an isopropenyl group. In Formula 2, R₂₁ to R₂₃ may each be hydrogen.

According to an embodiment, the indane-based compound derived from three α-methylstyrene-based monomers may include 1,3-dimethyl-1-(2-methyl-2-phenylpropyl)-3-phenylindane.

According to an embodiment, the indane-based compound derived from two α-methylstyrene-based monomers may be represented by Formula 3 below.

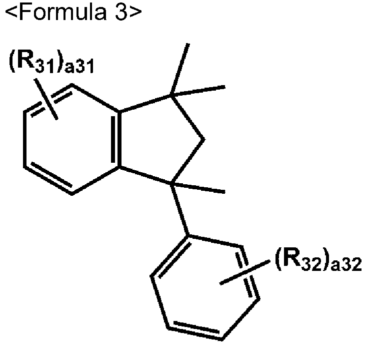

In Formula 3, R₃₁ and R₃₂ are each independently hydrogen, an alkyl group having 1 to 15 carbon atoms, or an alkenyl group having 2 to 15 carbon atoms; a31 is an integer of 1 to 4; and a32 is an integer of 1 to 5.

For example, in Formula 3, R₃₁ and R₃₂ may each independently be hydrogen, an alkyl group having 1 to 3 carbon atoms, or an alkenyl group having 2 to 3 carbon atoms; a31 may be an integer of 1 to 4; and a32 may be an integer of 1 to 5.

According to an embodiment, in Formula 3, R₃₁ and R₃₂ may be hydrogen, a methyl group, or an isopropenyl group. In Formula 3, R₃₁ and R₃₂ may each be hydrogen.

According to an embodiment, the indane-based compound derived from two α-methylstyrene-based monomers may include 1,3,3-trimethyl-1-phenylindane.

For example, the content of the indane-based compound derived from two α-methylstyrene-based monomers in the polymer composition may be 4.9 wt% or less, 4.85 wt% or less, 4.5 wt% or less, 4.0 wt% or less, 3.5 wt% or less, 3.0 wt% or less, 2.9 wt% or less, or 2.5 wt% or less. For example, the content of the indane-based compound derived from two α-methylstyrene-based monomers in the polymer composition may be 0.01 wt% to 5 wt%, 0.01 wt% to 4.9 wt%, 0.01 wt% to 4.85 wt%, 0.01 wt% to 4.5 wt%, 0.01 wt% to 4.0 wt%, 0.01 wt% to 3.5 wt%, 0.01 wt% to 3.0 wt%, 0.01 wt% to 2.9 wt%, 0.01 wt% to 2.5 wt%, 0.05 wt% to 5 wt%, 0.05 wt% to 4.9 wt%, 0.05 wt% to 4.85 wt%, 0.05 wt% to 4.5 wt%, 0.05 wt% to 4.0 wt%, 0.05 wt% to 3.5 wt%, 0.05 wt% to 3.0 wt%, 0.05 wt% to 2.9 wt%, or 0.05 wt% to 2.5 wt%.

According to an embodiment, the polymer composition may further include a pentene-based compound derived from two α-methylstyrene-based monomers.

For example, the pentene-based compound derived from two α-methylstyrene-based monomers may include compounds represented by Formula 4-1 and Formula 4-2 below.

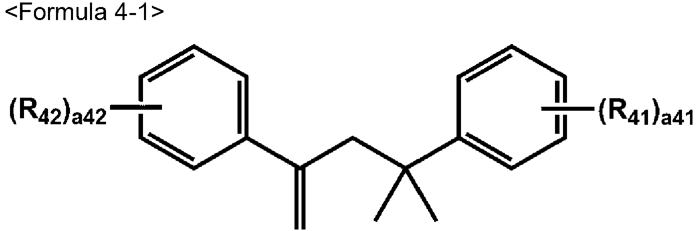

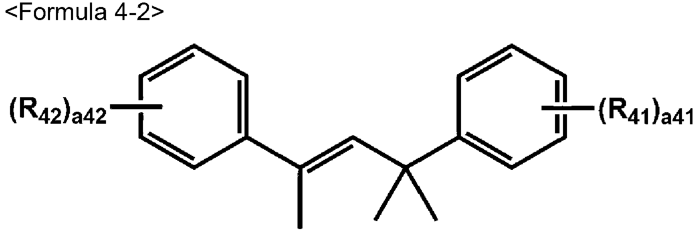

In Formula 4-1 and Formula 4-2, R₄₁ and R₄₂ are each independently hydrogen, an alkyl group having 1 to 15 carbon atoms, or an alkenyl group having 2 to 15 carbon atoms; and a41 and a42 are each independently an integer of 1 to 5.

For example, in Formula 4-1 and Formula 4-2, R₄₁ and R₄₂ are each independently hydrogen, an alkyl group having 1 to 3 carbon atoms, or an alkenyl group having 2 to 3 carbon atoms; and a41 and a42 are each independently an integer of 1 to 5. In Formula 4-1 and Formula 4-2, R₄₁ and R₄₂ may each independently be hydrogen, a methyl group, or an isopropenyl group. In Formula 4-1 and Formula 4-2, R₄₁ and R₄₂ may each be hydrogen.

According to an embodiment, the pentene-based compound derived from two α-methylstyrene-based monomers may include 2,4-diphenyl-4-methyl-1-pentene or 2,4-diphenyl-4-methyl-2(E)-pentene.

According to an embodiment, the content of the pentene-based compound derived from two α-methylstyrene-based monomers may be 20 wt% to 80 wt% based on the total weight of the polymer composition. The content of the pentene-based compound may be the sum of the content of a compound represented by Formula 4-1 and a compound represented by Formula 4-2. The content of the pentene-based compound may also be the sum of the content of 2,4-diphenyl-4-methyl-1-pentene and 2,4-diphenyl-4-methyl-2(E)-pentene.

For example, the content of the pentene-based compound derived from two α-methylstyrene-based monomers may be 25 wt% to 80 wt%, 30 wt% to 80 wt%, 32 wt% to 80 wt%, 35 wt% to 80 wt%, 20 wt% to 70 wt%, 20 wt% to 65 wt%, 20 wt% to 63 wt%, or 30 wt% to 65 wt%, based on the total weight of the polymer composition.

According to an embodiment, the total content of the pentene-based compound derived from two α-methylstyrene-based monomers and the indane-based compound derived from two α-methylstyrene-based monomers may be 25 wt% to 85 wt% based on the total weight of the polymer composition. For example, the total content of the pentene-based compound derived from two α-methylstyrene-based monomers and the indane-based compound derived from two α-methylstyrene-based monomers may be 30 wt% to 85 wt%, 32 wt% to 85 wt%, 25 wt% to 70 wt%, 25 wt% to 65 wt%, or 30 wt% to 65 wt%, based on the total weight of the polymer composition.

According to an embodiment, the polymer composition may further include a heptene-based compound derived from three α-methylstyrene-based monomers.

According to an embodiment, the heptene-based compound derived from three α-methylstyrene-based monomers may include a compound represented by Formula 5-1 or Formula 5-2.

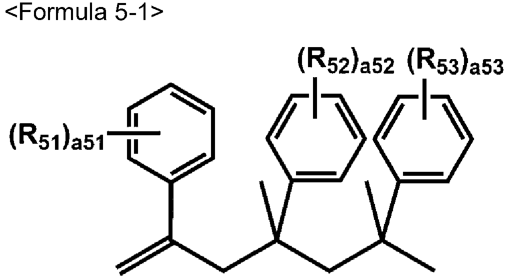

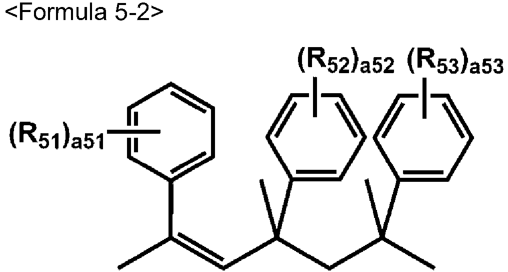

In Formula 5-1 and Formula 5-2, R₅₁ to R₅₃ are each independently hydrogen, an alkyl group having 1 to 15 carbon atoms, or an alkenyl group having 2 to 15 carbon atoms; and a51 to a53 are each independently an integer of 1 to 5.

For example, in Formula 5-1 and Formula 5-2, R₅₁ to R₅₃ are each independently hydrogen, an alkyl group having 1 to 3 carbon atoms, or an alkenyl group having 2 to 3 carbon atoms; and a51 to a53 are each independently an integer of 1 to 5. In Formula 5-1 and Formula 5-2, R₅₁ to R₅₃ may each independently be hydrogen, a methyl group, or an isopropenyl group. In Formula 5-1 and Formula 5-2, R₅₁ to R₅₃ may each be hydrogen.

According to an embodiment, the heptene-based compound derived from three α-methylstyrene-based monomers may include 2,4,6-triphenyl-4,6-dimethyl-1-heptene or 2,4,6-triphenyl-4,6-dimethyl-2-heptene.

According to an embodiment, the content of the heptene-based compound derived from three α-methylstyrene-based monomers may be 30 wt% to 70 wt% based on the total weight of the polymer composition. The content of the heptene-based compound derived from three α-methylstyrene-based monomers may be the sum of the content of the compound represented by Formula 5-1 and the content of the compound represented by Formula 5-2. The content of the heptene-based compound derived from three α-methylstyrene-based monomers may be the sum of the content of 2,4,6-triphenyl-4,6-dimethyl-1-heptene and the content of 2,4,6-triphenyl-4,6-dimethyl-2-heptene.

For example, the content of the heptene-based compound derived from three α-methylstyrene-based monomers may be 33 wt% to 70 wt%, 35 wt% to 70 wt%, 30 wt% to 68 wt%, 30 wt% to 65 wt%, or 33 wt% to 68 wt%, based on the total weight of the polymer composition.

According to an embodiment, the viscosity of the polymer composition may be 20 cps to 3,000 cps. When the viscosity of the polymer composition falls within the aforementioned range, the polymer composition for paint may be introduced more easily as a diluent in the paint composition described below. In addition, the processability and coatability of the paint composition described below may be improved. For example, the viscosity of the polymer composition may be 20 cps to 2,000 cps, 30 cps to 3,000 cps, 40 cps to 3,000 cps, or 40 cps to 2,000 cps.

According to an embodiment, the Gardner color of the polymer composition may be 4 or less. For example, the Gardner color of the polymer composition may be 3 or less, 2 or less, or 1.5 or less.

According to an embodiment, the weight average molecular weight (Mw) of the polymer composition may be 100 g/mol to 400 g/mol, and the number average molecular weight (Mn) of the polymer composition may be 100 g/mol to 400 g/mol.

For example, the weight average molecular weight (Mw) of the polymer composition may be 150 g/mol to 400 g/mol, 200 g/mol to 400 g/mol, 100 g/mol to 300 g/mol, or 200 g/mol to 300 g/mol.

For example, the number average molecular weight (Mn) of the polymer composition may be 50 g/mol to 400 g/mol, 200 g/mol to 400 g/mol, 100 g/mol to 300 g/mol, or 200 g/mol to 300 g/mol.

According to an embodiment, the polymer composition may be a polymer composition for an epoxy paint. For example, the polymer composition may be applied to a paint composition including an epoxy polymer.

Another aspect of the present disclosure provides a paint composition including the aforementioned polymer composition for paint.

According to an embodiment, the paint composition may include an epoxy polymer and the aforementioned polymer composition for paint. According to an embodiment, the epoxy polymer may be a bisphenol A epoxy polymer. For example, the bisphenol A epoxy polymer may be a polymerization product of bisphenol A and epichlorohydrin.

According to an embodiment, the content of the polymer composition for paint may be 1 wt% to 30 wt% based on the total weight of the paint composition.

According to an embodiment, the paint composition may further include a pigment, a solvent, or an additive.

Examples of the pigment may include inorganic pigments or organic pigments. The inorganic pigment may be at least one selected from the group consisting of chromates (e.g., chrome yellow, chrome vermilion), ferrocyanides (e.g., Prussian blue), sulfides (e.g., cadmium yellow, cadmium red), oxides (e.g., titanium oxide, iron oxide red, iron oxide black, zinc oxide), sulfates (e.g., barium sulfate, lead sulfate), silicates (e.g., ultramarine blue, calcium silicate), carbonates (e.g., calcium carbonate, magnesium carbonate), phosphates (e.g., cobalt violet), metal powders (e.g., aluminum powder, bronze powder), and carbon (carbon black).

The organic pigment may be at least one selected from the group consisting of azo-based pigments (benzidine yellow, hansa yellow, vulcan orange, permanent red F5R, carmine 6B, lake red C, chromophthal red, chromophthal yellow) and phthalocyanine-based pigments (phthalocyanine blue, phthalocyanine green).

Examples of the solvent may include aromatic hydrocarbon-based solvents such as toluene, xylene, Solvesso #100, and Solvesso #150; aliphatic hydrocarbon-based solvents such as hexane, heptane, octane, and decane; and ester-based solvents such as methyl acetate, ethyl acetate, isopropyl acetate, butyl acetate, amyl acetate, ethyl formate, and butyl propionate. Examples of water-miscible organic solvents that can be used may include alcohol-based solvents such as methanol, ethanol, propanol, and butanol; ketone-based solvents such as acetone, methyl ethyl ketone, and cyclohexanone; and glycol ether-based solvents such as ethylene glycol (mono-, di-)methyl ether, ethylene glycol (mono-, di-)ethyl ether, ethylene glycol monopropyl ether, ethylene glycol monoisopropyl ether, ethylene glycol monobutyl ether, diethylene glycol (mono-, di-)methyl ether, diethylene glycol (mono-, di-)ethyl ether, diethylene glycol monoisopropyl ether, diethylene glycol monobutyl ether, triethylene glycol (mono-, di-)methyl ether, propylene glycol (mono-, di-)methyl ether, propylene glycol monopropyl ether, propylene glycol monobutyl ether, and dipropylene glycol (mono-, di-)methyl ether.

The additive may include various lubricants, anti-foaming agents, leveling agents, curing agents, and curing co-agents. The curing agent may include an amine-based curing agent or an amide-based curing agent. The curing co-agent may include a melamine polymer, a benzoguanamine polymer, an isocyanate polymer, and the like.

Hereinbelow, the present disclosure will be described in greater detail with reference to the examples. The following examples are for illustrative purposes only to describe the present disclosure in greater detail, and it will be apparent to those skilled in the art that these examples should not be construed as limiting the scope of the present disclosure.

### Example 1 (PTSA + MAO Catalyst)

A four-neck flask equipped with a stirrer, condenser, and thermometer was charged with 333 g of xylene, 9 g (0.052 mol) of para-toluenesulfonic acid (PTSA), and 9 g of 10 % methylaluminoxane (MAO) in toluene. The mixture was heated to 65 °C and stirred for 30 minutes. At 65 °C, 1,000 g (8.462 mol) of α-methylstyrene (AMS) was added dropwise uniformly over 4 hours, followed by aging for 1 hour.

After completion of the reaction, 4.2 g of 50 % caustic soda and 173 g of water were introduced, and the mixture was heated to 80 °C and stirred for 30 minutes. After allowing the mixture to stand for 30 minutes, the aqueous lower layer was separated and removed. This washing procedure was repeated twice. The washing process continued until the pH of the final aqueous layer reached 6 to 8. In order to remove the solvent (xylene), degassing was carried out at 175 °C under conditions of less than 20 torr, thereby preparing a polymer composition.

The prepared polymer composition had a yield of 98.9 %, a viscosity of 132 cps (at 25 °C), an NV of 98.42 %, a Gardner color value of 0.7, a weight average molecular weight (Mw) of 235 g/mol, and a number average molecular weight (Mn) of 208 g/mol. According to GC-MS analysis, the trimethylphenylindane (TMPI) content in the polymer composition was 2.88 wt%, and 1,3-dimethyl-1-(2-methyl-2-phenylpropyl)-3-phenylindane was not detected. The contents of other components are shown in Table 1 below.

### Example 2 (PTSA + MAO Catalyst)

A polymer composition was prepared in the same manner as in Example 1, except that the reaction temperature was changed from 65 °C to 30 °C. The prepared polymer composition had a yield of 98.1 %, a viscosity of 1,970 cps (at 25 °C), an NV of 99.02 %, a Gardner color value of 1.4, a weight average molecular weight (Mw) of 297 g/mol, and a number average molecular weight (Mn) of 280 g/mol. According to GC-MS analysis, the content of trimethylphenylindane (TMPI) in the polymer composition was 0.08 wt%, and 1,3-dimethyl-1-(2-methyl-2-phenylpropyl)-3-phenylindane was not detected. The contents of other components are shown in Table 1 below.

### Example 3 (PTSA + MAO Catalyst)

A polymer composition was prepared in the same manner as in Example 1, except that the reaction temperature was changed from 65 °C to 95 °C. The prepared polymer composition had a yield of 98.7 %, a viscosity of 87 cps (at 25 °C), an NV of 98.74 %, a Gardner color value of 0.9, a weight average molecular weight (Mw) of 228 g/mol, and a number average molecular weight (Mn) of 201 g/mol. According to GC-MS analysis, the content of trimethylphenylindane (TMPI) in the polymer composition was 4.85 wt%, and 1,3-dimethyl-1-(2-methyl-2-phenylpropyl)-3-phenylindane was not detected. The contents of other components are shown in Table 1 below.

### Comparative Example 1 (BF₃·Phenolate Catalyst)

A polymer composition was prepared in the same manner as in Example 1, except that 9 g of BF₃·Phenolate was used instead of para-toluenesulfonic acid (PTSA) and 10 % methylaluminoxane (MAO) in toluene. The prepared polymer composition had a yield of 95.4 %, a viscosity of 54 cps (at 25 °C), an NV of 96.35 %, a Gardner color value of 3.2, a weight average molecular weight (Mw) of 229 g/eq, and a number average molecular weight (Mn) of 207 g/eq. According to GC-MS analysis, the content of trimethylphenylindane (TMPI) in the polymer composition was 23.13 wt%, and the content of 1,3-dimethyl-1-(2-methyl-2-phenylpropyl)-3-phenylindane was 4.58 wt%. The contents of other components are shown in Table 1 below.

### Comparative Example 2 (BF₃·Phenolate Catalyst)

A polymer composition was prepared in the same manner as in Example 2, except that 9 g of BF₃·Phenolate was used instead of para-toluenesulfonic acid (PTSA) and 10 % methylaluminoxane (MAO) in toluene. The prepared polymer composition had a yield of 95.3 %, a viscosity of 2,180 cps (at 25 °C), an NV of 96.85 %, a Gardner color value of 3.2, a weight average molecular weight (Mw) of 295 g/mol, and a number average molecular weight (Mn) of 273 g/mol. According to GC-MS analysis, the content of trimethylphenylindane (TMPI) in the polymer composition was 15.65 wt%, and the content of 1,3-dimethyl-1-(2-methyl-2-phenylpropyl)-3-phenylindane was 34.14 wt%. The contents of other components are shown in Table 1 below.

### Comparative Example 3 (PTSA + 85 % Phosphoric Acid Catalyst)

A polymer composition was prepared in the same manner as in Example 3, except that 9 g (0.052 mol) of para-toluenesulfonic acid (PTSA) and 9 g of 85 % phosphoric acid were used instead of para-toluenesulfonic acid (PTSA) and 10 % methylaluminoxane (MAO) in toluene, and the reaction temperature was changed from 95 °C to 115 °C. The prepared polymer composition had a yield of 94.8 %, a viscosity of 41 cps (at 25 °C), an NV of 96.29 %, a Gardner color value of 3.4, a weight average molecular weight (Mw) of 228 g/mol, and a number average molecular weight (Mn) of 197 g/mol. According to GC-MS analysis, the content of trimethylphenylindane (TMPI) in the polymer composition was 6.11 wt%, and the content of 1,3-dimethyl-1-(2-methyl-2-phenylpropyl)-3-phenylindane was 0.82 wt%. The contents of other components are shown in Table 1 below.

**[Table 1]**

| Compounds | Example 1 | Example 2 | Example 3 | Comparative Example 1 | Comparative Example 2 | Comparative Example 3 |
|---|---|---|---|---|---|---|
| 1,3-Dimethyl-1-(2-methyl-2-phenylpropyl)-3-phenylindane | ND | ND | ND | 4.58 | 34.14 | 0.82 |
| Trimethylphenylindane (TMPI) | 2.88 | 0.08 | 4.8 5 | 23.13 | 15.65 | 6.11 |
| 2,4-Diphenyl-4-methyl-1-pentene | 23.77 | 10.58 | 16.31 | 12.39 | 4.78 | 22.29 |
| 2,4-Diphenyl-4-methyl-2(E)-pentene | 39.02 | 21.35 | 33.28 | 28.57 | 9.03 | 42.18 |
| 2,4,6-Triphenyl-4,6-dimethyl-1-heptene | 22.62 | 42.83 | 31.35 | 22.30 | 22.84 | 18.47 |
| 2,4,6-Triphenyl-4,6-dimethyl-2-heptene | 11.14 | 24.48 | 13.66 | 8.16 | 12.97 | 9.76 |

### Evaluation Example 1 (Coating Film Performance Evaluation)

### Coating Film Formation

Liquid paint were prepared using the polymer compositions of Examples 1 to 3 and Comparative Examples 1 to 3 as diluents, and coating films were subsequently formed.

In a round plastic container, 284 g of liquid bisphenol-A epoxy resin (KE-8128, commercially available from Kolon Industries), 28.4 g of the polymer composition prepared in Examples 1 to 3 and Comparative Examples 1 to 3, 42 g of xylene, and 10 g of MIBK were added and mixed.

To each round plastic container, 0.6 g of a wetting agent was added, and then 21.5 g of Bentone (Viscogen 138) was gradually added using a high-speed mixer. The mixture was dispersed under vigorous stirring until Bentone particles were no longer visible. Next, 117 g of TiO₂, 358 g of talc, 4.8 g of iron oxide black, and 113 g of barium sulfate (BaSO₄) were added to the mixture. Subsequently, 23 g of xylene and 25 g of MIBK as solvents were added, and the mixture was stirred at 1,000 rpm for 15 minutes.

1.5 cups of glass beads measured using a standard paper cup were added to the stirred mixture. The mixture was dispersed using a shaker, with particle size measurements taken every 20 minutes. Dispersion was terminated when the particle size reached 40 µm or less. The glass beads were filtered out to prepare the paint composition.

A phenalkamine-type curing agent, LITE 2002 (AHEW = 104 g/eq), was mixed with the prepared paint composition in a 1:1 equivalent ratio of epoxy to active hydrogen to prepare the final composition. This composition was then applied to glass and steel specimens at thicknesses of 75 µm and 120 µm, respectively, and fully dried at room temperature to form coating films.

The properties of the formed coating films were evaluated using the following methods.
(1) Bending Adhesion (Bending Resistance) (ASTM E643, Erichsen Cupping test): Progressive deformation was applied to each coating film by indentation (pressing force inward) to evaluate resistance to cracking and delamination from the metal substrate. The measurement results are shown in Table 2 below.
(2) Impact Resistance (ASTM D2794): Using a DuPont-type impact tester, a 1 kg weight was dropped starting from a height of 400 mm onto each coating film, and the height at which each coating film cracked or delaminated was measured. The measurement results are shown in Table 2 below.
(3) Solvent Resistance and Acid/Alkali Resistance: Xylene, 5% sulfuric acid solution, and 5% caustic soda were applied onto each coating film's surface. After standing at room temperature for 72 hours, the degree of coating film damage was visually evaluated. The coating films were rated from 1 (Bad) for significant damage to 10 (Good) for minimal damage. The results are shown in Table 2.

**[Table 2]**

| | Bending resistance (mm) | Impact resistance (1,000 N*mm) | Chemical resistance | |
|---|---|---|---|---|
| | | | Solvent resistance | Acid/Alkali |
| Example 1 | 6.23 | 650 | 9 | 9/9 |
| Example 2 | 6.89 | 650 | 9 | 9/9 |
| Example 3 | 6.02 | 650 | 8 | 8/8 |
| Comparative Example 1 | 4.08 | 450 | 6 | 6/6 |
| Comparative Example 2 | 4.21 | 450 | 7 | 7/7 |
| Comparative Example 3 | 5.46 | 500 | 7 | 7/7 |

As shown in Table 2, the paint composition containing the polymer composition according to Examples exhibited improved bending resistance, impact resistance, and chemical resistance in the resulting coating films.

Therefore, the paint composition according to the present disclosure was able to readily achieve a coating film with enhanced bending resistance, impact resistance, and chemical resistance.

The foregoing examples and comparative examples are for illustrative purposes only, and the present disclosure is not limited thereto. Those skilled in the art will recognize that various modifications and variations can be made in view of the foregoing without departing from the scope of the present disclosure. Accordingly, the scope of the present disclosure shall be defined by the appended claims.

## Claims

1. A polymer composition, comprising a polymer comprising units derived from α-methylstyrene-based monomers,
wherein in the polymer composition, a content of an indane-based compound derived from two α-methylstyrene-based monomers is 5 wt% or less based on a total weight of the polymer composition, and
wherein in the polymer composition a content of an indane-based compound derived from three α-methylstyrene-based monomers is 0.1 wt% or less based on the total weight of the polymer composition.

2. The polymer composition of claim 1,
wherein the α-methylstyrene-based monomer is represented by Formula 1: 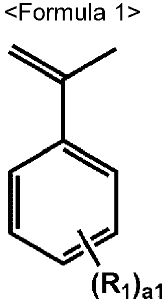
wherein in Formula 1,
R₁ is hydrogen, an alkyl group having 1 to 15 carbon atoms, or an alkenyl group having 2 to 15 carbon atoms, and
a1 is an integer of 1 to 5.

3. The polymer composition of claim 1,
wherein the indane-based compound derived from the three α-methylstyrene-based monomers is represented by Formula 2: 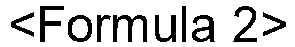 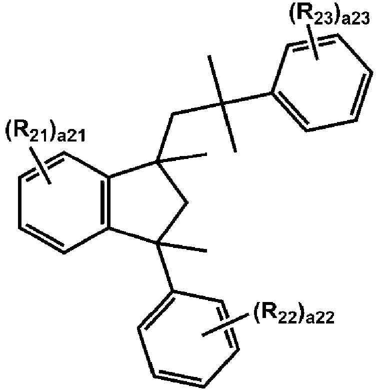
wherein in Formula 2,
R₂₁ to R₂₃ are each independently hydrogen, an alkyl group having 1 to 15 carbon atoms, or an alkenyl group having 2 to 15 carbon atoms, a21 is an integer of 1 to 4, and
a22 to a23 are each independently an integer of 1 to 5.

4. The polymer composition of claim 1,
wherein the indane-based compound derived from the three α-methylstyrene-based monomers comprises 1,3-dimethyl-1-(2-methyl-2-phenylpropyl)-3-phenylindane.

5. The polymer composition of claim 1,
wherein the indane-based compound derived from the two α-methylstyrene-based monomers is represented by Formula 3: 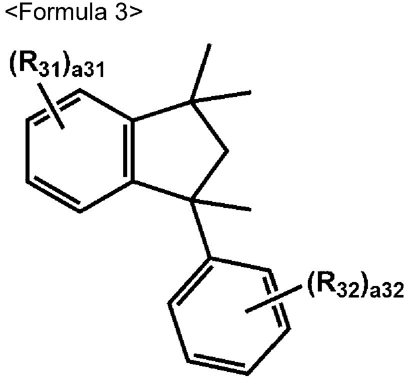
wherein in Formula 3,
R₃₁ and R₃₂ are each independently hydrogen, an alkyl group having 1 to 15 carbon atoms, or an alkenyl group having 2 to 15 carbon atoms,
a31 is an integer of 1 to 4, and
a32 is an integer of 1 to 5.

6. The polymer composition of claim 1,
wherein the indane-based compound derived from the two α-methylstyrene-based monomers comprises 1,3,3-trimethyl-1-phenylindane.

7. The polymer composition of claim 1,
further comprising a pentene-based compound derived from the two α-methylstyrene-based monomers.

8. The polymer composition of claim 7,
wherein the pentene-based compound derived from the two α-methylstyrene-based monomers comprises compounds represented by Formula 4-1 and Formula 4-2: 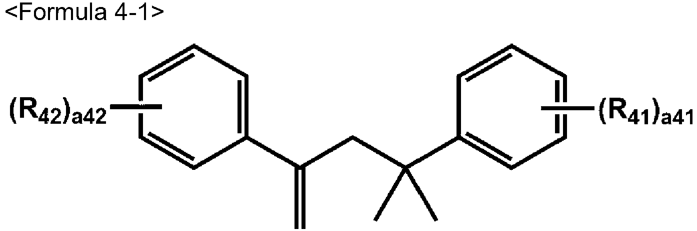 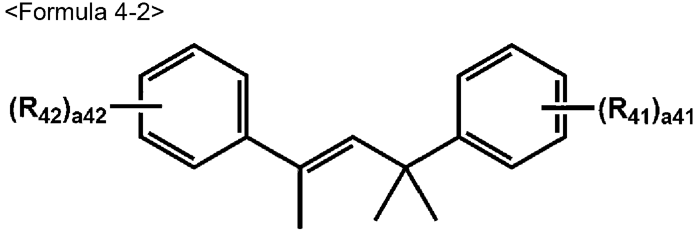
wherein in Formula 4-1 and Formula 4-2,
R₄₁ and R₄₂ are each independently hydrogen, an alkyl group having 1 to 15 carbon atoms, or an alkenyl group having 2 to 15 carbon atoms, and
a41 and a42 are each independently an integer of 1 to 5.

9. The polymer composition of claim 7,
wherein in the polymer composition, a content of the pentene-based compound derived from the two α-methylstyrene-based monomers is 20 wt% to 80 wt% based on the total weight of the polymer composition.

10. The polymer composition of claim 7,
wherein a total content of the pentene-based compound derived from the two α-methylstyrene-based monomers and the indane-based compound derived from the two α-methylstyrene-based monomers is 25 wt% to 85 wt% based on the total weight of the polymer composition.

11. The polymer composition of claim 1, further comprising a heptene-based compound derived from the three α-methylstyrene-based monomers.

12. The polymer composition of claim 11,
wherein the heptene-based compound derived from the three α-methylstyrene-based monomers comprises a compound represented by Formula 5-1 or Formula 5-2: 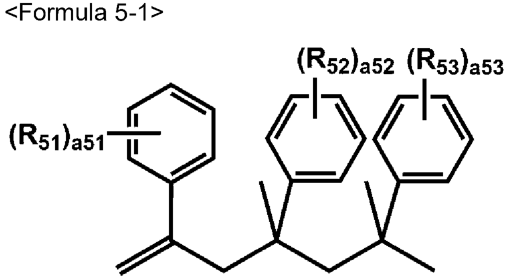 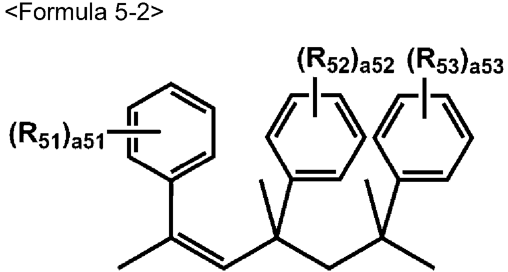
wherein in Formula 5-1 and Formula 5-2,
R₅₁ to R₅₃ are each independently hydrogen, an alkyl group having 1 to 15 carbon atoms, or an alkenyl group having 2 to 15 carbon atoms, and a51 to a53 are each independently an integer of 1 to 5.

13. The polymer composition of claim 12,
wherein a content of the heptene-based compound derived from the three α-methylstyrene-based monomers is 30 wt% to 70 wt% based on the total weight of the polymer composition.

14. A paint composition, comprising the polymer composition according to claim 1.

15. The paint composition of claim 14, further comprising an epoxy polymer.
